(19) Europäisches Patentamt

European Patent Office

Office européen des brevets

(11) EP 1 020 054 B1

(12) EUROPÄISCHE PATENTSCHRIFT

(45) Veröffentlichungstag und Bekanntmachung des Hinweises auf die Patenterteilung:
07.05.2003 Patentblatt 2003/19

(51) Int Cl.⁷: **H04L 25/03**

(21) Anmeldenummer: 98955398.7

(86) Internationale Anmeldenummer:
**PCT/EP98/05891**

(22) Anmeldetag: **16.09.1998**

(87) Internationale Veröffentlichungsnummer:
**WO 99/017457 (08.04.1999 Gazette 1999/14)**

(54) **VERFAHREN ZUR ENTZERRUNG EINES EMPFANGSSIGNALS**

METHOD FOR EQUALISING A RECEIVE SIGNAL

PROCEDE POUR L'EGALISATION D'UN SIGNAL DE RECEPTION

(84) Benannte Vertragsstaaten:
**DE FR GB NL**

(30) Priorität: **30.09.1997 DE 19743171**

(43) Veröffentlichungstag der Anmeldung:
**19.07.2000 Patentblatt 2000/29**

(73) Patentinhaber: **EADS Deutschland GmbH**
**81663 München (DE)**

(72) Erfinder: **BRAKEMEIER, Achim**
**D-89134 Blaustein (DE)**

(74) Vertreter: **Meel, Thomas**
**Patentassessor,**
**c/o Dornier GmbH**
**L H G**
**88039 Friedrichshafen (DE)**

(56) Entgegenhaltungen:
EP-A- 0 428 129     US-A- 5 251 237
US-A- 5 293 401     US-A- 5 513 214

• YOW-JONG LIU ET AL: "A SOFT-OUTPUT BIDIRECTIONAL DECISION FEEDBACK EQUALIZATION TECHNIQUE FOR TDMA CELLULAR RADIO" IEEE JOURNAL ON SELECTED AREAS IN COMMUNICATIONS., Bd. 11, Nr. 7, 1. September 1993, Seiten 1034-1045, XP000400013 NEW YORK US

**Beschreibung**

Die Erfindung betrifft ein Verfahren zur Entzerrung eines Empfangssignals nach dem Oberbegriff des Patentanspruchs 1.

Bei Übertragungskanälen mit Mehrwegeausbreitung muß das im Empfänger aufgenommene Signal vor der Auswertung des Nachrichteninhalts entzerrt werden. Entzerrerfilter sind in verschiedener Ausführung bekannt, siehe z. B. eine Aufzählung in "Digitaler Mittelwellenrundfunk" von A. Brakemeier in teiekom praxis 9/96, Seite 33-38. Darüber hinaus ist aus der US-A-5 293 401 eine zweikanalige Entzerrung mit zwei Richtungen bekannt, bei der sich zwei entzerrte Datenfolgen ergeben, wobei dann diejenige , die mit dem geringeren Schätzungsfehler behaftet ist, ausgewählt wird. Zur Schätzung der Kanalstoßantwort, die für die Einstellung des Entzerrerfilters erforderlich ist, sind in das übertragene Signal Testfolgen bekannter Struktur eingefügt, insbesondere sogenannte PN-Folgen oder CAZAC-Folgen.

Ein häufig eingesetztes Entzerrerverfahren ist die Entzerrung mit Entscheidungsrückführung (Decision Feedback Equalizer). Die bekannten Entzerrungsverfahren arbeiten zufriedenstellend bei Übertragungskanälen mit gegenüber dem Hauptsignal schwächeren Nachläufern, zeigen aber insbesondere bei umgekehrter Signalleistungsverteilung erhebliche Mängel.

Der vorliegenden Erfindung liegt daher die Aufgabe zugrunde, ein Verfahren der eingangs genannten Art dahingehend zu verbessern, daß die Abhängigkeit der Entzerrerleistung von der Struktur der Kanalstoßantwort verringert wird.

Die Erfindung ist im Patentanspruch 1 beschrieben. Die Unteransprüche enthalten vorteilhafte Ausgestaltungen und Weiterbildungen der Erfindung.

Die Erfindung ermöglicht mit geringem Aufwand den Einsatz einer besonders geeigneten von mehreren vorgegebenen Varianten zum Vorgehen bei der Entzerrung. Der Aufwand kann insbesondere vorteilhaft gering gehalten werden bei Vorgabe von nur zwei unterschiedlichen Varianten, insbesondere einer der konventionellen Vorgehensweise entsprechenden Vorwärts-Entzerrung und einer zeitinversen Rückwärts-Entzerrung. Die Entscheidung zwischen den verschiedenen Varianten kann als Klassifikations-Problemstellung aufgefaßt werden, für welche ein Klassifikator aufgestellt werden kann. Ein vorteilhaftes und aufwandsarmes Kriterium zur Klassifikation ist die sogenannte Schiefe der Kanalstoßantwort oder einer daraus abgeleiteten Funktion, die einfach zu berechnen ist und deren Vorzeichen bei einer bevorzugten Ausführungsform der Erfindung die Auswahl einer von zwei Varianten der Entzerrung angibt.

Die Vorgabe einer zeitinversen Rückwärts-Entzerrung neben der konventionellen Vorwärts-Entzerrung hat den Vorteil, daß zur Berechnung der Filterkoeffizienten für beide Varianten die mit Ausnahme der zusätzlichen Zeitinversion gleiche Berechnungsvorschrift eingesetzt werden kann. Der Zeitverlust durch die Zwischenspeicherung der Abtastwerte oder daraus abgeleiteter Werte eines Rahmens ist vernachlässigbar, zumal ohnehin durch das übliche Interleaving und Scrambling der Symbole eine Auswerteverzögerung auftritt. Die rahmenweise Bearbeitung bei der Entzerrung bietet darüber hinaus noch weitere Vorteile, beispielsweise die Berücksichtigung zweier mit verschiedenen Testfolgen gewonnener Kanalstoßantworten.

Die Erfindung ist nachfolgend anhand bevorzugter Ausführungsbeispiele unter Bezugnahme auf die Abbildungen noch eingehend veranschaulicht. Dabei zeigt:

Fig. 1    eine Rahmenstruktur eines Signals

Fig. 2    zwei unterschiedliche Strukturen der Kanalstoßantwort

Fig. 3    eine schematische Darstellung eines erfindungsgemäßen Verfahrens

Fig. 4    einen Entzerrer mit Entscheidungsrückführung

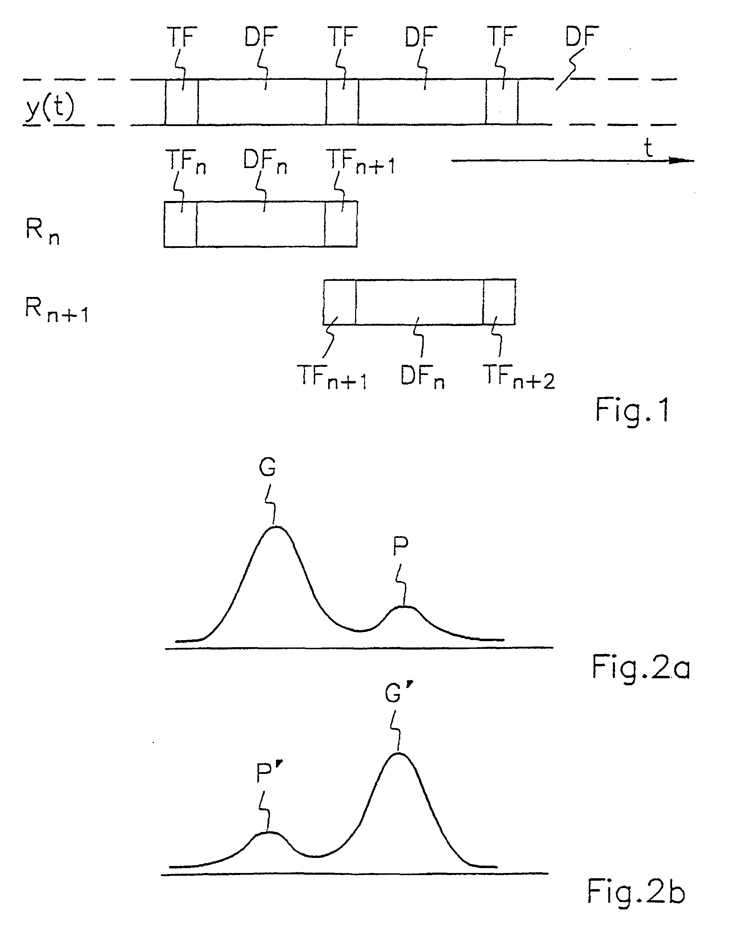

In an sich bekannter Art ist das gesendete Signal y(t) aufgeteilt in Testfolgen TF, deren Struktur und Symbolfolgen auch empfängerseitig bekannt sind, und von diesen Testfolgen eingerahmte Datenfolgen DF mit dem zu übermittelnden Dateninhalt. Für die Zwecke der weiteren Erläuterung der Erfindung seien überlappende Signalabschnitte $R_n$, $R_{n+1}$ als Signal-Rahmen betrachtet, die jeweils am Anfang und am Ende Testfolgen TF aufweisen, die eine Datenfolge DF zwischen sich einschließen (Fig. 1).

Das im Empfänger aufgenommene Empfangssignal ist durch die Übertragungseigenschaften des Übertragungskanals beeinflußt. Von den Einwirkungen des Empfangssignals seien hier vor allem die Verzerrungen durch Mehrwegeausbreitung, die auch zeitveränderlich sein können, behandelt.

Mit Hilfe der Testfolgen kann eine datenunabhängige Kanalschätzung durchgeführt werden, sofern die Länge der Testfolgen mindestens doppelt so groß ist wie die maximale Länge der Kanalstoßantwort. Die Güte der Schätzung der Kanalstoßantwort hängt direkt von den Testsymbolen ab. Günstig sind statistisch ausgewogene Testsymbole, d.h. Testfolgen mit guten Korrelationseigenkönnen dann eingesetzt werden, wenn die Testfolge eine teilperiodische innere Struktur besitzt. Diese und weitere Eigenschaften von Testfolgen sind an sich aus dem Stand der Technik bekannt. Die Verwendung von Testfolgen ermöglicht insbesondere auch eine Rahmensynchronisation des Empfangssignals.

In Fig. 2a ist ein typischer Verlauf einer Kanalstoßantwort mit zwei Maxima entsprechend einer leistungsstärkeren Grundwelle G und einer leistungsschwächeren verzögerten Raumwelle P skizziert. Ein gebräuchlicher Entzerrer mit Entscheidungsrückführung liefert bei einem derart verzerrten Kanal im Regelfall durchaus zufriedenstellende Ergebnisse der entzerrten Symbole. Bei einer Struktur der Kanalstoßantwort der in Fig. 2b skizzierten Art mit schwächerer Grundwelle G' und stärkerer Raumwelle P' neigt der selbe Entzerrer zu höherer Fehlerrate oder gar zu oszillierendem Verhalten.

Durch die Erfindung werden verschiedene Strukturen der Kanalstoßantwort unterschieden und nach Maßgabe dieser Unterscheidung verschiedene Varianten der Entzerrung eingesetzt, die besser an die jeweiligen Übertragungseigenschaften des Kanals angepaßt sind.

Für den in Fig. 2b skizzierten Fall wird vorteilhafterweise der betreffende Rahmen zeitinvers behandelt, so daß die Rollen von Grundwelle und Raumwelle als vertauscht angesehen werden können. Auf einen solchen zeitinvertierten Rahmen kann dann wieder mit gutem Erfolg eine Entzerrung wie bei der Kanalsituation entsprechend Fig. 2a angewandt werden. Dies ist als zeitinverse Rückwärts-Entzerrung bezeichnet, wogegen die Entzerrung ohne Zeitinversion als konventionelle Vorwärts-Entzerrung bezeichnet ist.

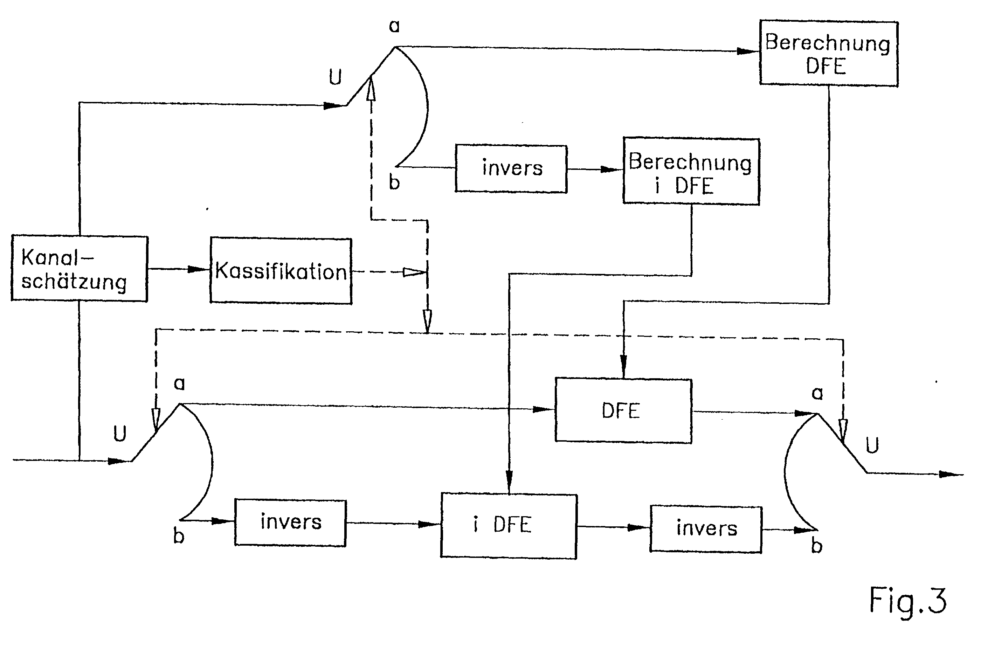

in Fig. 3 ist ein Ablaufschema für ein erfindungsgemäßes Verfahren mit einer konventionellen Vorwärts-Entzerrung und einer zeitinversen Rückwärts-Entzerrung skizziert. Für einen Rahmen R wird eine Schätzung der Kanalstoßantwort vorgenommen und aufgrund dieser Schätzung wird eine Klassifikation der Kanalstoßantwort in eine von zwei Klassen vorgenommen. Unter Heranziehung der bildlichen Darstellungen in Fig. 2 seien beispielsweise im Folgenden Strukturen der in Fig. 2a skizzierten Art als linkslastig, Strukturen der in Fig. 2b skizzierten Art als rechtslastig bezeichnet. Die je nach Klassenzuordnung vorgenommene weitere Signalverarbeitung ist durch parallele Verarbeitungswege mit Umschaltern U veranschaulicht. Die eingezeichnete Stellung a der Umschalter entspricht der Entzerrung nach der konventionellen Vorwärts-Methode für linkslastige Kanalstoßantworten (Fig. 2a).

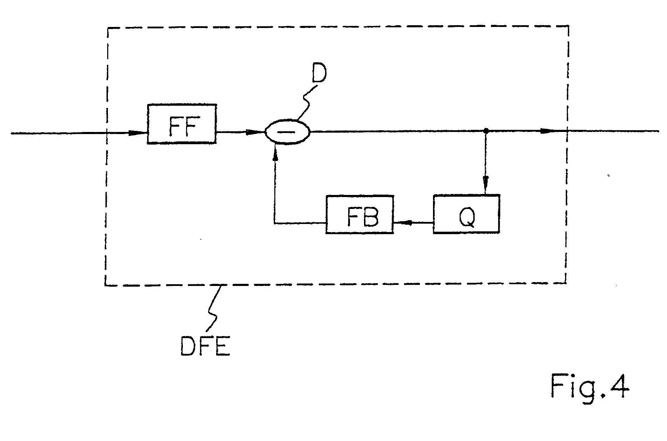

Nach der Entscheidung auf die zur Entzerrung auszuwählende Variante werden aus der geschätzten Kanalstoßantwort die Koeffizienten zur Einstellung des Entzerrers berechnet. Für die Berechnungsweise sind zu den bekannten Entzerrertypen verschiedene Vorschriften aus dem Stand der Technik bekannt. Mit dem berechneten Koeffizientensatz wird das Entzerrerfilter DFE eingestellt und die Datenfolge des betrachteten Rahmens kann entzerrt werden. Die entzerrte Datenfolge kann danach decodiert werden. Die typische Funktionsweise eines Entzerrers mit Entscheidungsrückführung ist als Ablaufschema in Fig. 4 skizziert. Der Entzerrer DFE enthält dabei ein erstes Transversalfilter FF im durchlaufenden Signalweg, einen Quantisierer Q sowie ein zweites Transversalfilter FB in einem Rückführungszweig und eine Subtraktionsstufe D. Der Aufbau kann im einzelnen noch variieren, insbesondere kann der Quantisierer auch im durchgehenden Signalweg angeordnet und/oder das erste Transversalfilter in zwei hintereinander angeordnete Teilfilter unterteilt sein, wobei das erste Teilfilter insbesondere ein Kanal-Matched-Filter oder vorzugsweise ein Kanal-Mismatched-Filter sein kann. Die Berechnung der Entzerrereinstellung liefert Koeffizienten für alle einzustellenden Filter bzw. Teilfilter. Neben der direkten Berechnung der Entzerrerkoeffizienten können diese zumindest teilweise auch iterativ eingestellt werden.

Wird in der Klassifikationsstufe auch eine rechtslastige Kanalstoßantwort (Fig. 2b) entschieden, so wird die Berechnung der Filterkoeffizienten entsprechend einer zeitinvertierten Kanalstoßantwort durchgeführt, was in Fig. 3 einer Stellung b der Umschalter U gleichkommt. Die Zeitinvertierung wird auch auf die Abtastwerte des betrachteten Rahmens angewandt, bevor diese dem nach der zeitinversen Kanalstoßantwort eingestellten Entzerrerfilter iDFE zugeführt werden. Die Ausgangssymbolfolge des Entzerrers wird wiederum zeitinvertiert und steht damit wieder in zeitrichtiger Symbolreihenfolge für die Decodierung zur Verfügung.

Im Unterschied zum konventionellen Entzerrerbetrieb. bei welchem die Daten synchron zum Abtasttakt durch das Filter geschoben werden können, wird bei der Erfindung zumindest bei der Rückwärts-Entzerrung eine rahmenweise Verarbeitung durchgeführt. Die Entzerrung kann dabei auch mit wesentlich höherer Arbeitsgeschwindigkeit durchgeführt werden.

Die rahmenweise Verarbeitung für alle Klassifikationsfälle mit Zwischenspeicherung der Abtastwerte ermöglicht vorteilhafterweise auch eine bessere Anpassung der Entzerrereinstellung an zeitveränderliche Kanäle, indem vor der Klassifikation beide eine Datenfolge $DF_n$ einrahmende Testfolgen $TF_n$, $TF_{n+1}$ zur Schätzung je einer Kanalstoßantwort herangezogen werden. Die Klassifikation kann dann auf beide Kanalstoßantworten gestützt werden, beispielsweise durch Mittelung der Kanalstoßantworten oder durch Auswahl der aus dem leistungsstärkeren oder rauschärmeren Testfolgensignal gewonnen Kanalstoßantwort und so weiter. Hierdurch kann z. B. auch ein während einer der Testfolgen aufgetretener Signalschwund (Fading) überbrückt werden.

Für die Berechnung der Entzerrereinstellung wird bevorzugt diejenige Kanalstoßantwort ausgewertet, deren Abtastwerte bei der Entzerrung als erste in das Entzerrerfilter eingespeist werden. Bei Vorwärts-Entzerrung des Rahmens $R_n$ also die Kanalstoßantwort aus der Testfolge $TF_n$, bei Rückwärts-Entzerrung die Kanalstoßantwort aus der Testfolge $TF_{n+1}$. Bei schnell zeitveränderlichen Übertragungskanälen beispielsweise mit starker Phasendrehung kann das Entzerrerfilter auch adaptiv nachgeführt werden, indem zwischen den Kanalstoßantworten aus den beiden Testfolgen $TF_n$, $TF_{n+1}$ interpoliert wird.

Gegenüber einer gleichfalls denkbaren Kombination einer Vorwärts- und einer Rückwärts-Entzerrung, die sich entweder jeweils nur über eine halbe Rahmenlänge erstrecken oder die nach der Entzerrung einer Bestauswahl unterworfen werden, hat die Auswahl einer Variante den Vorteil des wesentlich geringeren Verarbeitungsaufwands, da insbesondere nur eine Entzerrereinstellung bestimmt werden muß.

Die Klassifikation der Kanalstoßantwort bietet eine dem gegenüber besonders aufwandsarme günstige Alternative, wobei insbesondere eine Klassifikation der Kanalstoßantwort anhand der sogenannten Schiefe einer Funktion vorteilhaft ist. Hierzu wird für die Analyse der Kanalstoßantwort mit diskreten Werten $a_i$ diese in eine diskrete Warscheinlichkeitsdichte

$$p_i = |h_i|^r/E_H \text{ mit } E_H = \Sigma|h_i|^r$$

umgesetzt, wobei die Norm $r>0$ die Art der Umsetzung bestimmt. Vorzugsweise wird $r=2$ gewählt. Dann bezeichnet $E_H$ die Energie der Kanalstoßantwort. Die Summation erstreckt sich über sämtliche Abtastwerte $i$ der Kanalstoßantwort.

Neben Mittelwert und Standardabweichung werden auch höhere Momente der diskreten Wahrscheinlichkeitsdichte $p_i$ berechnet. Der Mittelwert im Sinne des Schwerpunkts der Kanalstoßantwort ergibt sich zu

$$\mu = \Sigma i \cdot p_i.$$

Die Standardabweichung $\sigma$ wird wie üblich berechnet zu

$$\sigma = \sqrt{\Sigma(i-\mu)^2 \cdot p_i}.$$

Die sogenannte Schiefe ergibt sich zu

$$s(h) = \Sigma(i-\mu)^3 \cdot p_i/\sigma^3.$$

Die Klassifikation der Kanalstoßantwort wird vorteilhafterweise aufgrund dieses Werts für die Schiefe vorgenommen. Insbesondere kann allein aus den Vorzeichen der Schiefe eine Klassifikation derart vorgenommen werden, daß bei positiver Schiefe die Kanalstoßantwort als linkslastig, bei negativer Schiefe dagegen als rechtslastig eingestuft und die zugeordnete Variante der Entzerrung ausgewählt wird.

Bei dem bevorzugten Einsatz eines Entzerrers mit Entscheidungsrückführung ist die zeitinverse Signalverarbeitung im zeitinversen Entzerrerfilter nur zwingend für den Rückführungszweig des Entzerrerfilters. Das Transversalfilter FF im durchgehenden Signalzweig kann in konventioneller Weise eingesetzt werden. Dazu werden die Entzerrerkoeffizienten aus der zeitinversen Kanalstoßantwort berechnet. Die erhaltenen Koeffizienten für das erste Transversalfilter FF werden wiederum zeitinvertiert. Danach kann die Filterung im ersten Transversalfilter in normaler Zeitabfolge des Empfangssignais erfolgen.

Die Erfindung ist nicht auf die vorstehend beschriebenen Ausführungsbeispiele beschränkt, sondern im Rahmen fachmännischen Könnens in verschiedener Weise variierbar.

**Patentansprüche**

**1.** Verfahren zur Entzerrung eines über einen zeitveränderlichen Übertragungskanal empfangenen und abgetasteten Signals mittels eines Entzerrerfilters (DFE), dessen Filterkoeffizienten nach Maßgabe einer Schätzung der Kanalstoßantwort anhand von in das Signal eingelagerten Testfolgen (TF) die mit dazwischen eingeschlossenen Datenfolgen (DF) Signalrahmen ($R_n$, $R_{n+1}$) bilden, eingestellt werden, **dadurch gekennzeichnet, daß** aus der Schätzung der Kanalstoßantwort eine Entscheidung über die Anwendung einer von mindestens zwei verschiedenen Vorgehensweisen zur Entzerrung abgeleitet wird, wobei zumindest zwischen einer Vorwärts-Entzerrung und einer zeitinversen Rückwärts-Entzerrung gewählt werden kann.

**2.** Verfahren nach Anspruch 1, **dadurch gekennzeichnet, daß** die Entscheidung über die anzuwendende Entzerrung aus der zeitlichen Reihenfolge von Maxima der Kanalstoßantwort abgeleitet wird.

**3.** Verfahren nach Anspruch 1 oder 2, **dadurch gekennzeichnet, daß** die Schiefe der Kanalstoßantwort ermittelt und zur Entscheidung über die anzuwendende Entzerrung herangezogen wird.

**4.** Verfahren nach Anspruch 3, **dadurch gekennzeichnet, daß** nach Maßgabe des Vorzeichens der Schiefe eine Vorwärts-Entzerrung ohne eine zeitinverse Rückwärts-Entzerrung durchgeführt wird.

**5.** Verfahren nach einem der Ansprüche 1 bis 4, **dadurch gekennzeichnet, daß** für die zeitinverse Rückwärts-Entzerrung

a) die Entzerrer-Filterkoeffizienten aus der zeitinvertierten Kanalstoßantwort berechnet werden

b) die zwischengespeicherten Abtastwerte oder daraus abgeleitete Werte des Rahmens ($R_n$, $R_{n+1}$) in zeitinvertierter Folge durch das Entzerrfilter (DFE) bearbeitet werden

c) die Folge der entzerrten Symbole wieder zeitinvertiert wird.

**6.** Verfahren nach einem der Ansprüche 1 bis 5, **dadurch gekennzeichnet, daß** zur Berechnung der Filterkoeffizienten für die Vorwärts-Entzerrung die Kanalstoßantwort am Rahmenanfang, für die zeitinverse Rückwärts-Entzerrung die Kanalstoßantwort am Rahmenende herangezogen wird.

**7.** Verfahren nach einem der Ansprüche 1 bis 5, **dadurch gekennzeichnet, daß** zur Berechnung der Filterkoeffizienten eine gemittelte Kanalstoßantwort herangezogen wird.

**8.** Verfahren nach einem der Ansprüche 1 bis 5, **dadurch gekennzeichnet, dass** die Entzerrung adaptiv entsprechend einer Interpolation zwischen den Kanalstoßantworten zweier Testfolgen ($TF_n$, $TF_{n+1}$), die eine Datenfolge ($DF_n$) einrahmen, erfolgt.

**9.** Verfahren nach einem der Ansprüche 1 bis 8, **dadurch gekennzeichnet, daß** zur Entzerrung ein Entzerrerfilter (DFE)mit Entscheidungsrückführung eingesetzt wird.

**10.** Verfahren nach einem der Ansprüche 1 bis 9, **dadurch gekennzeichnet, daß** als Entzerrerfilter ein Mismatched-Filter verwendet wird.

## Claims

**1.** Method for equalization of a sampled signal which is received via a transmission channel which varies with time, by means of an equalization filter (DFE) whose filter coefficients are set on the basis of an estimate of the channel impulse response using test sequences (TF) which are incorporated into the signal and form signal frames ($R_n$, $R_{n+1}$) with data sequences (DF) included between them, **characterized in that** the estimate of the channel impulse response is used to derive a decision on the use of one of at least two different procedures for equalization, in which case it is possible to choose at least between forward equalization and time-inverse backward equalization.

**2.** Method according to Claim 1, **characterized in that** the decision on the equalization to be used is derived from the time sequence of maxima of the channel impulse response.

**3.** Method according to Claim 1 or 2, **characterized in that** the gradient of the channel impulse response is determined and is used to decide the equalization to be used.

**4.** Method according to Claim 3, **characterized in that** forward equalization without time-inverse backward equalization is carried out on the basis of the mathematical sign of the gradient.

**5.** Method according to one of Claims 1 to 4, **charac-**

**terized in that**, for time-inverse backward equalization,

    a) the equalizer filter coefficients are calculated from the time-inverted channel impulse response,
    b) the temporarily stored samples or values of the frame ($R_n$, $R_{n+1}$) derived from them are processed in a time-inverted sequence by the equalization filter (DFE) and
    c) the sequence of equalized symbols is once again time-inverted.

**6.** Method according to one of Claims 1 to 5, **characterized in that** the channel impulse response at the frame start is used to calculate the filter coefficients for forward equalization, and the channel impulse response at the frame end is used for the time-inverse backward equalization.

**7.** Method according to one of Claims 1 to 5, **characterized in that** an averaged channel impulse response is used to calculate the filter coefficients.

**8.** Method according to one of Claims 1 to 5, **characterized in that** the equalization is carried out adaptively on the basis of interpolation between the channel impulse responses of two test sequences ($TF_n$, $TF_{n+1}$) which bracket a data sequence ($DF_n$).

**9.** Method according to one of Claims 1 to 8, **characterized in that** an equalization filter (DFE) with decision feedback is used for equalization.

**10.** Method according to one of Claims 1 to 9, **characterized in that** a mismatched filter is used as the equalization filter.

## Revendications

**1.** Procédé d'égalisation d'un signal reçu et échantillonné via un canal de transfert variable dans le temps, au moyen d'un filtre égaliseur (DFE) dont les coefficients de filtre sont réglés selon une estimation de la réponse impulsionnelle de canal au moyen de séquences de test (TF) incorporées dans le signal, qui forment des trames de signaux ($R_n$, $R_{n+1}$) avec des séquences de données incluses entre lesdites séquences de test, **caractérisé en ce qu'**une décision concernant l'application d'une d'au moins deux différentes procédures d'égalisation est dérivée de l'estimation de la réponse impulsionnelle de canal, un choix pouvant être fait au moins entre une égalisation en avant et une égalisation en arrière à temps inversé.

**2.** Procédé selon la revendication 1, **caractérisé en**

**ce que** la décision concernant l'égalisation à appliquer est dérivée de la séquence temporelle de maxima de la réponse impulsionnelle de canal.

3. Procédé selon la revendication 1 ou 2, **caractérisé en ce que** la dissymétrie de la réponse impulsionnelle de canal est déterminée et est utilisée pour décider de l'égalisation à appliquer.

4. Procédé selon la revendication 3, **caractérisé en ce qu'**une égalisation en avant est exécutée sans égalisation en arrière à temps inversé, selon le signe de la dissymétrie.

5. Procédé selon l'une quelconque des revendications 1 à 4, **caractérisé en ce que** pour l'égalisation en arrière à temps inversé

   a) les coefficients de filtre d'égalisation sont calculés à partir de la réponse impulsionnelle de canal à temps inversé
   b) les valeurs d'échantillonnage stockées de façon intermédiaire ou les valeurs de la trame ($R_n$, $R_{n+1}$) dérivées de celles-ci sont traitées dans un ordre à temps inversé par le filtre égaliseur (DFE)
   c) l'ordre des symboles égalisés est à nouveau inversé dans le temps.

6. Procédé selon l'une quelconque des revendications 1 à 5, **caractérisé en ce qu'**on se sert de la réponse impulsionnelle de canal au début de la trame pour l'égalisation en avant, de la réponse impulsionnelle de canal à la fin de la trame pour l'égalisation en arrière à temps inversé en vue de calculer les coefficients de filtre.

7. Procédé selon l'une quelconque des revendications 1 à 5, **caractérisé en ce qu'**on se sert d'une réponse impulsionnelle de canal moyenne en vue de calculer les coefficients de filtre.

8. Procédé selon l'une quelconque des revendications 1 à 5, **caractérisé en ce que** l'égalisation est effectuée par adaptation selon une interpolation entre les réponses impulsionnelles de canal de deux séquences de test ($TF_n$, $TF_{n+1}$) qui encadrent une séquence de données ($DF_n$).

9. Procédé selon l'une quelconque des revendications 1 à 8, **caractérisé en ce qu'**un filtre égaliseur (DFE) avec retour de décision est utilisé pour l'égalisation.

10. Procédé selon l'une quelconque des revendications 1 à 9, **caractérisé en ce qu'**un filtre non adapté est utilisé comme filtre égaliseur.

Fig.1

Fig.2a

Fig.2b

Fig.3

EP 1 020 054 B1

Fig.4